# EUROPEAN PATENT APPLICATION

(11) **EP 1 980 540 A1**
(43) Date of publication of application: **15.10.2008**
(21) Application number: 07290415.4
(22) Date of filing: 05.04.2007
(51) Int. Cl.: C04B 14/28, C04B 20/00, C04B 24/08, C04B 26/02, C04B 26/06

(54) **Superhydrophobic gypsum boards and process for making same**

(71) Applicant: LAFARGE, 75116 Paris (FR)
(72) Inventor: Boisvert, Jean-Philippe, 69110 St.-Foy-les-Lyon (FR); Hedman, Goran, 84220 Gordes (FR)
(74) Representative: Mérigeault, Shona

(57) **Abstract**

The present invention relates to a gypsum board comprising a gypsum core having a first side and a second side and a facing sheet disposed on the first side, wherein the facing sheet is made of a sheet material and said sheet material comprises at least one surfactant, filler particles and at least one polymeric binder.

It also relates to a process of making a gypsum board.

## Description

### TECHNICAL FIELD

The present invention relates to hydrophobic or superhydrophobic gypsum boards as well as to a process for making hydrophobic or superhydrophobic gypsum boards.

### TECHNICAL BACKGROUND

Gypsum boards are traditionally made of a gypsum core sandwiched between two facers or liners. Cellulose is widely used as the basic material of such liners because it binds well to the gypsum board, it has a good tension modulus and it costs relatively little. However, cellulose-based liners lose considerable strength when they are wet, so that gypsum boards with a wet facer are practically impossible to use. More recently, other materials have been used as liners in the manufacture of gypsum boards, such as fiberglass or synthetic fiber non-woven or woven textiles, but they do not entirely solve the problem of the sensitivity of gypsum boards to wet conditions and can irritate the skin.

It is therefore desirable to treat the liners to make them hydrophobic and impermeable to liquid water. On the other hand, permeability of the liners to vapor water is also desirable in order for the setting and drying of gypsum to take place normally.

In this respect, water-borne coating treatments are usually more difficult to implement and more limited than solvent-borne coating treatments, due to the dual requirement for a stable coating dispersion in the aqueous phase and for hydrophobicity in the dry state of the final coating layer. Moreover, standard oil-in-water emulsion-based strategies for encapsulating and delivering hydrophobic species tend to leave an emulsifier (e.g. surfactant) on the coated surface upon drying, which in turn tends to enhance wetting of the surface.

US 6,660,363 discloses an object with a self-cleaning surface upon exposure to water, wherein said surface comprises elevations and depressions made of hydrophobic polymers or permanently hydrophobized materials. This structure is obtained by preparing the object in a mold having a negative of the 3-D surface shape (or by stamping or etching an object with a flat surface) and by subsequently applying a hydrophobic polymer solution or dispersion onto the surface. It can also be obtained by glueing a hydrophobic polymer powder directly onto the flat surfaced-object.

WO 97/29157 discloses a coating formulation which enables to make a surface "superhydrophobic", i.e. almost totally water-repellent, owing to the entrapment of air in microstructures provided on said surface. An example of such a coating formulation is fumed silica blended with hydrocarbon resin or finely ground inorganic particles deposited by heating the formulation or preheating the substrate.

US 6,712,932 discloses a micro-structured paper with particles bound thereto by a binder, which is thereby hydrophobic across its entire cross-section. The paper is claimed also to have a non-adhesive effect.

US 2003/0147932 relates to a surface with a plurality of irregularities provided by hydrophobic and anti-microbial particles. The particles are secured to the surface via curing of the carrier surface.

US 2004/0081818 relates to a self-cleaning coating comprising a base lacquer layer and a top layer with an artificial surface structure made of hydrophobic particles.

FR 2852966 describes an aqueous composition for treating surfaces in order to make them "superhydrophobic", comprising a water-borne thermoplastic core/shell polymer emulsion and mineral fillers such as diatoms.

In a number of other patent documents (WO 02/49980A1, EP 0933388 A2, US 3,354,022, US 4,125,673, WO 96/04123, EP 0985741 A1, EP 0949296 A1, EP 1043380 A1), high contact angle with water on a highly hydrophobic substrates have been reported. In all these cases, the citations relate to surface structures created by precipitation, aggregation, deposition of hydrophobic particles on the surface or by etching, embossing, stamping, etc the surface. These patents describe the use of silicone- or fluoro-based polymers and/or surface treatment of the particles in suspension in organic solvents. Indeed, as explained in the scientific literature since decades, a perfectly flat surface of perfectly aligned -CF₃ surface groups leads to a contact angle with water below 120°. This flat-surfaced material gives the lowest intrinsic surface energy for a solid. However, higher contact angles can be achieved by using materials with higher surface energy as long as the appropriate texture is created from these materials.

There is still a need for an alternative process of producing a sheet material which would be highly liquid water-repellent (although substantially not vapor water-repellent) and which would be well adapted for use as a facer in the manufacture of gypsum boards. Hence, it would be useful to have a coating to make the cellulose impervious to water and remain vapor breathable.

### BRIEF DESCRIPTION OF THE DRAWINGS

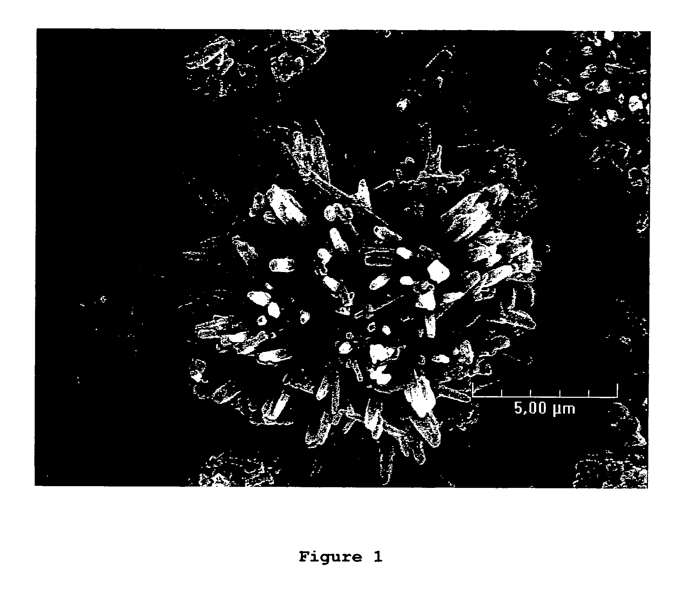

On **Figure 1** is provided a picture of the product Sturcal H (see below) obtained by Scanning Electron Microscopy.

### SUMMARY OF THE INVENTION

It is a first object of the invention to provide a gypsum board comprising a gypsum core having a first side and a second side and a facing sheet disposed on the first side, wherein the facing sheet is made of a sheet material and said sheet material comprises at least one surfactant, filler particles and at least one polymeric binder.

According to a particular embodiment, the abovementioned gypsum board additionally comprises a backing sheet on the second side, wherein the backing sheet is made of a sheet material and said sheet material comprises at least one surfactant, filler particles and at least one polymeric binder.

According to a particular embodiment:
- the at least one surfactant is present in a weight amount of from about 0.2 to about 20 parts, preferably from about 1 to about 4 parts per 100 parts of filler particles;
- the at least one polymeric binder is present in a weight amount of from about 10 parts to about 60 parts, preferably from about 20 parts to about 40 parts per 100 parts of filler particles.

According to a particular embodiment, the at least one surfactant is at least one fatty acid or salt thereof.

According to a particular embodiment, the at least one fatty acid is selected from the group consisting of stearic acid, palmitic acid, oleic acid and salts thereof, in particular sodium oleate.

According to a particular embodiment, the filler particles are inorganic particles, the surface of which is basic or has been made basic by treatment, and are preferably selected from the group consisting of aluminum hydroxide, barium sulfate, calcite, calcium carbonate, calcium sulfate, barium sulfate, aluminum hydride, magnesium hydroxide, magnesium carbonate, calcinated clay, dolomite, magnesite, talc, titanium dioxide, vaterite, anatase, kaolin, zincite, corundum, hematite, magnetite, ilmenite, cassiterite, dispore, boehmite, goethite, lepidocrocite, rhodocrosite, siderite, baryte, strontianite, apatite, feldspar, fluorite, silicone dioxide and combinations thereof.

According to a particular embodiment, the filler particles are precipitated calcium carbonate particles, preferably aragonite.

According to a particular embodiment, the filler particles have a D₅₀ of less than about 20 µm, preferably from about 0.1 to about 20 µm, most preferably from about 0.5 to about 10 µm.

According to a particular embodiment, the filler particles have an absolute density (in kg/L) of less than about 1, preferably from about 0.45 to about 0.65.

According to a particular embodiment, the filler particles have a BET specific surface area of more than about 0.5 m²/g, preferably from about 0.5 to about 20 m²/g.

According to a particular embodiment, the filler particles comprise acicular particles.

According to a particular embodiment, the at least one polymeric binder is a latex selected from the group consisting of carboxylated latex, styrene acrylate, styrene-butadiene latex and mixtures thereof.

According to a particular embodiment, the sheet material comprises paper, glass fibers, natural fibers, synthetic fibers, composite paper or a woven or non-woven textile.

According to a particular embodiment, the at least one surfactant, filler particles and at least one polymeric binder are present as a coating on the surface of the sheet material opposite to the gypsum core.

According to a particular embodiment, the coating partially or wholly penetrates the sheet material.

According to a particular embodiment, the at least one surfactant, filler particles and at least one polymeric binder are present at a density of from about 3 to about 100, preferably from about 10 to about 50, expressed in g of coating composition per m² of sheet material.

According to a particular embodiment, the sheet material further comprises at least one additive selected from the group consisting of optical brighteners, defoaming agents, antioxidants, film formation agents, coalescence agents, biocides, fungicides, lubricants, rheology modifiers, crosslinkers, dyes, and color pigments or a combination thereof.

It is another object of the invention to provide a process of making a gypsum board, comprising the steps of:
- depositing a gypsum slurry to form a gypsum core onto a facing sheet;
- placing a backing sheet opposite the facing sheet with the gypsum core therebetween;
   wherein said facing sheet and/or backing sheet is made of a sheet material the surface of which comprises at least one surfactant, filler particles, a polymeric binder; and
- drying the board.

It is another object of the invention to provide a process of making a gypsum board comprising the steps of:
- treating a sheet material, said treating step comprising the step of applying a coating composition onto at least one side of the sheet material, wherein the coating composition comprises at least one surfactant, filler particles, a polymeric binder and water, the coating composition being applied onto only one side of the sheet material;
- depositing a gypsum slurry to form a gypsum core onto a facing sheet;
- placing a backing sheet opposite the facing sheet with the gypsum core therebetween; and
- drying the board;
wherein the facing sheet and/or the backing sheet are made of the treated material.

It is another object of the invention to provide a process of making a gypsum board comprising the steps of:
- depositing a gypsum slurry to form a gypsum core onto a facing sheet, wherein said facing sheet is made of a sheet material;
- placing a backing sheet opposite the facing sheet with the gypsum core therebetween, wherein said backing sheet is made of a sheet material;
- treating the sheet material of the facing and / or backing sheet, said treating step comprising the step of applying a coating composition onto at least one side of the sheet material, wherein the coating composition comprises at least one surfactant, filler particles, a polymeric binder and water and the coating composition is applied on the side of the sheet material which is not in contact with the gypsum core; followed or preceded by
- drying the board.

According to a particular embodiment, the coating composition is applied by at least one method selected from the group consisting of spray coating, dip coating, roll application, free jet application, blade metering, rod metering, metered film press coating, air knife coating, curtain coating, flexography printing, roll coating and powder coating.

According to a particular embodiment, the treating step comprises heating the sheet material after applying the coating composition.

According to a particular embodiment, the coating composition is applied at a paper mill, by roller coating, blade coating, ponding, curtain coating, spraying, atomization, air knife or preferably in a size press in a paper machine.

According to a particular embodiment, the coating composition comprises:
- from about 0.1 to about 2 wt%, preferably from about 0.5 to about 1 wt%, most preferably from about 0.7 to about 0.8 wt% of at least one surfactant;
- from about 20 to about 55 wt%, preferably from about 30 to about 45 wt%, most preferably from about 35 to about 40 wt% of filler particles;
- from about 5 to about 20 wt%, preferably from about 8 to about 15 wt%, most preferably from about 10.5 to about 12 wt% of polymeric binder; and
- water.

According to a particular embodiment, the coating composition is prepared by adding a dispersion of polymeric binder in water to a surfactant / filler particles solution and mixing.

According to a particular embodiment, the surfactant /filler particles solution is prepared by successively:
- mixing the at least one surfactant with water into a surfactant solution;
- mixing the filler particles with water into a filler particles solution; and
- adding the surfactant solution to the filler particles solution and mixing.

According to a particular embodiment, the surfactant /filler particles solution is prepared by successively:
- mixing the at least one surfactant with water into a surfactant solution; and
- adding the surfactant solution to the filler particles and mixing.

According to a particular embodiment of the abovementioned process, the gypsum board is as described above.

It is another object of the invention to provide the use of at least one surfactant, filler particles and polymeric binder for rendering a gypsum board hydrophobic or superhydrophobic.

According to a particular embodiment of said use, the gypsum board is as described above.

The invention will be described below with the preferred choice of the at least one surfactant being at least one fatty acid and the polymeric binder being a latex. Yet, it should be kept in mind that other choices of surfactant and polymeric binder are possible as well. As a result the fatty acid mentioned below can be replaced in all instances by any ionic (anionic or cationic), amphoteric or non-ionic surfactant, in particular by a silicon-based surfactant or by a fluorosurfactant, or by alkyl phosphate or diphosphonate sodium salts.

The present invention enables to overcome the inconveniences of the prior art, in particular according to particular embodiments:
- The invention uses water-borne coating to create high hydrophobicity of the substrate without any artificial curing of the coating (i.e. other than drying the coating in a conventional process) nor stamping or etching.
- The invention does not use ground calcium carbonate but rather preferably low density precipitated calcium carbonate; there is no need to heat neither the formulation nor the substrate to achieve high hydrophobicity.
- The invention relates to a coating on which adhesives such as mortars can adhere.
- There is neither a need to use anti-microbial particles nor a need to cure the substrate surface.
- There is no need to make use of core/shell polymer emulsion to achieve contact angles above 140°, nor of any fluoro- or silicone-based binders.

In particular the invention provides a sheet material with hydrophobic or "superhydrophobic" properties on one side and hydrophilic properties on the other side, which is thus well adapted to prepare gypsum boards with satisfactory water-repellent characteristics. By superhydrophobic is meant that the surface of the sheet material entraps air under any water droplet placed on the surface, so that said surface is therefore almost totally water-repellent.

Accordingly, for the sake of convenience, the definition of hydrophobic surface described herein relates to surface having a contact angle with water above 120°, preferably above 130°, while a superhydrophobic surface as described herein relates to a surface having a contact angle with water above 140°. Methods of measurement of contact angle are described below.

The various advantages of the invention are obtained by designing a single coating composition which can impart both a hydrophobic character and a microstructure to a surface upon drying.

Without wishing to be bound by any theory, it is the Applicant's understanding that, in the coating composition used in the context of the present invention, the fatty acid molecules in water strongly bind to the filler particles to first form a hydrophobizing monolayer (i.e. with head down and tail out) onto which a second surrounding layer of fatty acid can build (in reverse, i.e. tail against tail and head out) to give a hydrophilic bilayer acting as a particle dispersant. On application of the coating composition and evaporation / penetration of the water phase, the outer layer of fatty acid disassembles (since it is no longer energetically favorable) to leave the hydrophobic inner layer of fatty acid bound to the particles and in contact with the (hydrophobic) air. Moreover, the fatty acid released from this outer layer can re-adsorb at other sites in the coating layer, e.g. on the latex particles, bridged by adsorbed cations (such as Ca²⁺), to thus build a hydrophobizing monolayer covering these other polar sites. While the latex primarily plays the role of a binder and instills mechanical strength, it thus also sustains or enhances hydrophobicity.

According to particular embodiments, the invention also has the following advantageous features:
- The approach of the present invention makes use of simple, standard and approved chemicals, i.e. well known fatty acid and their salts, specific forms of precipitated calcium carbonate, and water resistant latex binders. It is relatively cheap and can be easily implemented.
- The gypsum board with a superhydrophobic exterior obtained through the invention exhibits entirely satisfactory adhesive and mechanical properties.
- The method of the present invention is suitable for high-speed coating.

### DESCRIPTION OF EMBODIMENTS

The invention will now be described in more detail without limitation in the following description.

### Coating composition

The coating composition used in the present invention comprises filler particles. These filler particles preferably have an acicular and / or thorny and / or spiny shape. By "acicular" is meant needle-shaped. Other possible shapes include chestnut husk shapes. The filler particles may have a relatively poor packing, which is advantageous for the roughness of the coating (hence for superhydrophobicity). On **Figure 1** is shown an example of suitable filler particles.

Particles with one of the desirable shapes may be defined by a small size, a low density and a high specific surface (large surface-to-volume ratio). Thus, according to a preferred embodiment, the filler particles have a D₅₀ of less than about 20 µm and / or an absolute density (in kg/L) of less than about 1 and / or a BET specific surface area (as determined by nitrogen adsorption) of more than about 0.5 m²/g. Ideally, the filler particles have a D₅₀ from about 0.1 to about 20 µm (or from about 0.5 to about 10 µm) and / or an absolute density (in kg/L) from about 0.45 to about 0.65 and / or a BET specific surface area from about 0.5 m²/g to about 20 m²/g (or from about 0.5 m²/g to about 10 m²/g).

By D₅₀ is meant the 50^{th} percentile of the size distribution of the filler particles. Accordingly 50 % of the filler particles have a size greater than D₅₀ and 50% of the filler particles have a size of less than D₅₀. The size of the particles may be determined by laser particle size analysis. The D₅₀ may optionally refer to aggregates of primary particles, when such aggregates are present

The filler particles are inorganic particles (i.e. particles comprising inorganic material, although small amounts of organic material may be present). Theses particles are preferably basic, i.e. they exhibit basic functional groups on their surface. They can either be intrinsically basic or they may be treated to obtain basic functional groups on the surface prior to being used. Examples of such treatment include contacting the inorganic particles with an aqueous solution of at least one hydrolysable polyvalent metal salt, followed by neutralization. The treatment is preferably carried out before the fatty acid or salt thereof is coated on the inorganic particles.

The filler particles are preferably calcium carbonate particles, most preferably precipitated calcium carbonate. Yet other types of filler particles may be used, such as aluminum hydroxide, barium sulfate, calcite, calcium carbonate, calcium sulfate, barium sulfate, aluminum hydride, magnesium hydroxide, magnesium carbonate, calcinated clay, dolomite, magnesite, talc, titanium dioxide, vaterite, anatase, kaolin, zincite, corundum, hematite, magnetite, ilmenite, cassiterite, dispore, boehmite, goethite, lepidocrocite, rhodocrosite, siderite, baryte, strontianite, apatite, feldspar, fluorite, silicone dioxide and combinations thereof. In the case of titanium dioxide, anatase, calcinated clay, kaolin and clay the particles are advantageously treated to make them basic prior to being used in the coating composition of the invention. Preferably, these particles are provided free of hydrophilic agents such as dispersants, polymers or other such materials (in particular sodium polyacrylate polymers or copolymers) on their surface.

In particular, the particles may comprise at least one substance selected from the group consisting of calcium carbonate and kaolin. The particles may comprise at least one substance selected from the group consisting of anatase, calcinated clay, kaolin, and talc, the surface of which has been made basic. The particles may comprise at least one substance selected from the group consisting of aluminium hydroxide, aragonite, barium sulphate, calcite, calcium sulphate, dolomite, magnesium hydroxide, magnesium carbonate, magnesite, titanium dioxide (rutile), and vaterite. The particles may comprise at least one substance selected from the group consisting of zincite, corundum, hematite, magnetite, ilmenite, and cassiterite. The particles may comprise at least one substance selected from the group consisting of dispore, boehmite, goethite, lepidocrocite, rhodocrosite, siderite, baryte, strontianite, apatite, feldspar and fluorite. The particles may comprise SiO₂.

Acicular aragonite is a preferred choice for the filler particles, especially acicular aragonite with a D₅₀ from about 0.1 to about 20 µm, preferably from about 0.5 to about 10 µm. Alternatively, a combination of more conventional PCC (precipitated calcium carbonate) or GCC (ground calcium carbonate) products having different particle size distributions with a tendency to aggregate enhanced owing to suitable polymers can also be used.

The coating composition used in the present invention comprises at least one fatty acid, for example one fatty acid or two fatty acids or a combination of several fatty acids. The number of carbon atoms of the at least one fatty acid can preferably range from 8 to 22, more preferably from 10 to 18. Besides, the at least one fatty acid can be saturated or unsaturated, linear or branched. The at least one fatty acid can be in the form of a salt corresponding to any conventional cation such as sodium. Sodium oleate (based on cis-9-octadecenioc acid also known as oleic acid) is a preferred choice. A fully saturated fatty acid such as stearic acid (in particular its sodium salt) can be preferable in certain circumstances.

The coating composition used in the present invention comprises a polymeric binder, in particular a synthetic latex (i.e. an aqueous dispersion of polymer particles prepared by emulsion polymerization of one or more monomers), preferably styrene-butadiene latex, styrene acrylic or acrylic ester. For example, latexes supplied by Dow Chemicals under the brand names HPQ 73 or DL 940 or by Rhodia under the brand name Ultradia 7100, 7300 or 7400 are suitable.

More generally, a carboxylated latex, i.e. an emulsion polymer stabilized predominantly by carboxylation may be used. Preferably, the glass transition temperature of the binder is in the range from about -40°C to about 50°C, and more preferably from about 0 to about 50°C.

Latex with a higher glass transition temperature generally performs better than latex with a lower glass transition temperature because in the latter case rapid deposition and spreading of the latex on the filler particles may occur, which may bury the adsorbed layer of fatty acid.

The monomer composition employed in the preparation of the latex may comprise from about 10 to 95 pphm of a first monomer (A), from about 40 to 90 pphm of a second monomer (B), and from 0 to about 5 pphm of a functional monomer (C). As used herein, the term "pphm" means parts per hundred monomer, a term well known to those skilled in the art. Accordingly, the total parts of monomer employed is 100 parts monomer, on a weight basis.

The first monomer (A) may be a low Tg monomer comprising an alkyl acrylate or butadiene. The low Tg monomer is used in amounts of from about 10 pphm to about 95 pphm, preferably 15 pphm to 40 pphm. Examples of low Tg monomers include monomers having a Tg of less than 10°C that are C₁-C₁₀ alkyl esters of acrylic acid, C₂-C₁₀ alkyl esters of alpha, beta-ethylenically unsaturated C₄-C₆ monocarboxylic acids, C₄-C₁₀ dialkyl esters of alpha, beta-ethylenically unsaturated C₄-C₈ dicarboxylic acids, and vinyl esters of carboxylic acids, including, without limitation, vinyl isobutyrate, vinyl-2-ethyl-hexanoate, vinyl propionate, vinyl isooctanoate and vinyl versatate and butadiene. The low Tg monomer can be selected from the group consisting of C₁-C₁₀ alkyl esters of (meth)acrylic acid, i.e. alkyl (meth)acrylates, and C₄-C₈ dialkyl esters of maleic, itaconic and fumaric acids. Preferably, at least one C₂-C₈ alkyl ester of acrylic acid is utilized. Examples of low Tg monomers include ethyl acrylate, butyl acrylate, 2-ethyl hexyl acrylate, decyl acrylate, dibutyl maleate, dioctyl maleate, and butadiene. Mixtures of first monomers can be employed.

The second monomer (B) may be a high Tg monomer having a Tg greater than 10°C such as, for example, vinyl esters of carboxylic acids, the acid having from two to about 13 carbon atoms and styrene. Representative high Tg comonomers include methyl methacrylate, dimethyl maleate, t-butyl methacrylate, t-butyl isobornyl acrylate, phenyl methacrylate, acrylonitrile and vinyl esters of carboxylic acids having Tg of greater than 10°C and styrene. Examples of such vinyl esters include vinyl pivalate, vinyl neodecanoate, vinyl neononanoate, and mixtures of branched vinyl esters such as the commercially available VeoVa 11 and EXXAR Neo-12. The second monomer advantageously is employed in an amount of from about 40 pphm to about 90 pphm, preferably 60 pphm to 85 pphm. Mixtures of high Tg comonomers can be employed.

It may also be desired to incorporate in the polymeric binder minor amounts of one or more functional comonomers (C). Suitable copolymerizable comonomers (C) include, for example: acrylic acid; methacrylic acid; itaconic acid; fumaric acid; the half esters of maleic acid, such as monoethyl, monobutyl or monooctyl maleate; acrylamide; tertiary octylacrylamide; N-methylol (meth)acrylamide; N-vinylpyrrolidinone; diallyl adipate; triallyl cyanurate; butanediol diacrylate; allyl methacrylate; etc.; as well as C₂-C₃ hydroxyalkyl esters such as hydroxyethyl acrylate, hydroxy propyl acrylate and corresponding methacrylates. The comonomer (C) generally is used at levels of less than 5 pphm, preferably less than 2.5 pphm, depending upon the nature of the specific comonomer. Mixtures of comonomer (C) can be employed.

In addition, certain copolymerizable monomers that assist in the stability of the binder, e.g., vinyl sulfonic acid, sodium vinyl sulfonate, sodium styrene sulfonate, sodium allyl ether sulfate, sodium 2-acrylamide-2-methylpropane sulfonate (AMPS), 2-sulfoethyl methacrylate, and 2-sulfopropyl methacrylate, can be employed as emulsion stabilizers. These optional monomers, if employed, are added in very low amounts of from 0.1 pphm to about 2 pphm.

Methods for preparing synthetic latexes are well known in the art and any of these procedures can be used.

Suitable free radical polymerization initiators are the initiators known to promote emulsion polymerization and include water-soluble oxidizing agents, such as, organic peroxides (e.g., t-butyl hydroperoxide, cumene hydroperoxide, etc.), inorganic oxidizing agents (e.g., hydrogen peroxide, potassium persulfate, sodium persulfate, ammonium persulfate, etc.) and those initiators that are activated in the water phase by a water-soluble reducing agent. Such initiators are employed in an amount sufficient to cause polymerization. As a general rule, a sufficient amount is from about 0.1 to about 5 pphm. Alternatively, redox initiators may be employed, especially when polymerization is carried out at lower temperatures. For example, reducing agents may be used in addition to the persulfate and peroxide initiators mentioned above. Typical reducing agents include, but are not limited to: alkali metal salts of hydrosulfites, sulfoxylates, thiosulfates, sulfites, bisulfites, reducing sugars such as glucose, sorbose, ascorbic acid, erythorbic acid, and the like. In general, the reducing agents are used at levels from about 0.01 pphm to about 5 pphm.

The emulsifying agents are those generally used in emulsion polymerization. The emulsifiers can be anionic, cationic, surface-active compounds or mixtures thereof.

Suitable nonionic emulsifiers include polyoxyethylene condensates. Exemplary polyoxyethylene condensates that can be used include polyoxyethylene aliphatic ethers, such as polyoxyethylene lauryl ether and polyoxyethylene oleyl ether; polyoxyethylene alkaryl ethers, such as polyoxyethylene nonylphenol ether and polyoxyethylene octylphenol ether; polyoxyethylene esters of higher fatty acids, such as polyoxyethylene laurate and polyoxyethylene oleate, as well as condensates of ethylene oxide with resin acids and tall oil acids; polyoxyethylene amide and amine condensates such as N-polyoxyethylene lauramide, and N-lauryl-N-polyoxyethylene amine and the like; and polyoxyethylene thio-ethers such as polyoxyethylene n-dodecyl thio-ether.

Nonionic emulsifying agents that can be used also include a series of surface active agents available from BASF under the PLURONIC and TETRONIC trade names. In addition, a series of ethylene oxide adducts of acetylenic glycols, sold commercially by Air Products under the SURFYNOL trade name, are suitable as nonionic emulsifiers.

Representative anionic emulsifiers include the alkyl aryl sulfonates, alkali metal alkyl sulfates, the sulfonated alkyl esters, and fatty acid soaps. Specific examples include sodium dodecylbenzene sulfonate, sodium butylnaphthalene sulfonate, sodium lauryl sulfate, disodium dodecyl diphenyl ether disulfonate, N-octadecyl sulfosuccinate and dioctyl sodiumsulfosuccinate. The emulsifiers are employed in amounts effective to achieve adequate emulsification of the polymer in the aqueous phase and to provide desired particle size and particle size distribution.

Other ingredients known in the art to be useful for various specific purposes in emulsion polymerization, such as, acids, salts, chain transfer agents, chelating agents, buffering agents, neutralizing agents, defoamers and plasticizers also may be employed in the preparation of the polymer. For example, if the polymerizable constituents include a monoethylenically unsaturated carboxylic acid monomer, polymerization under acidic conditions (pH 2 to 7, preferably 2 to 5) is preferred. In such instances the aqueous medium can include those known weak acids and their salts that are commonly used to provide a buffered system at the desired pH range.

Various protective colloids may also be used in place of or in addition to the emulsifiers described above. Suitable colloids include casein, hydroxyethyl starch, carboxyethyl cellulose, carboxymethyl cellulose, hydroxyethylcellulose, gum arabic, alginate, poly(vinyl alcohol), polyacrylates, polymethacrylates, styrene-maleic anhydride copolymers, polyvinylpyrrolidones, polyacrylamides, polyethers, and the like, as known in the art of emulsion polymerization technology. In general, when used, these colloids are used at levels of 0.05 to 10% by weight based on the total weight of the reactor contents.

The manner of combining the polymerization ingredients can be by various known monomer feed methods, such as, continuous monomer addition, incremental monomer addition, or addition in a single charge of the entire amounts of monomers. The entire amount of the aqueous medium with polymerization additives can be present in the polymerization vessel before introduction of the monomers, or alternatively, the aqueous medium, or a portion of it, can be added continuously or incrementally during the course of the polymerization.

Final particle size of the latex can vary from 30 nm to 1500 nm.

The amount of binder must be high enough so that the coating exhibits the desired adhesion, mechanical strength and hydrophobicity, but on the other hand the amount of binder must not be too high so that the hydrophobicity of the coating is reduced by the binder submerging the inorganic particles. A person skilled in the art can in the light of this description adjust the amount of binder within the range of the appended claims.

The acid number (or carboxylation degree) of the latex should be adapted relative to the amount of fatty acid in the coating composition. Indeed it is undesirable that a large number of -COOH moieties on the latex remain available (i.e. are not bound to fatty acid molecules via the mineral cations brought by the filler particles). Therefore, in general, low-carboxylated latex should perform best unless the amount of fatty acid is increased.

As discussed above, the presence of latex is beneficial for the mechanical strength and hydrophobicity properties of the coated substrate. Nevertheless, the amount of latex in the coating composition should be kept within the ranges set forth above, because an excess of latex may reduce the roughness (hence the superhydrophobicity) of the surface which is attributable to the filler particles, by submerging them.

The coating composition used in the present invention can also contain various additives such as optical brighteners, antioxidants, coalescence agents, defoamers, rheology modifiers or crosslinkers, biocides or fungicides.

An optical brightener is a dye that absorbs light in the ultraviolet and violet region of the electromagnetic spectrum and reemits light in the blue region. An antioxidant is a substance capable of preventing, slowing down or suppressing oxidation. A coalescence agent is an agent that causes or promotes coalescence. A defoamer or defoaming agent is a substance capable of preventing, slowing down or suppressing foaming. A rheology modifier is a substance able to modify rheological properties of a fluid. A biocide is a substance capable of preventing, slowing down or suppressing growth of living organisms. A fungicide is a substance capable of preventing, slowing down or suppressing growth of fungi.

The coating composition is preferably prepared by:
- preparing a fatty acid solution by mixing the at least one fatty acid with water (preferably at a fatty acid-to-water weight ratio of from about 0.005 to about 0.1, more preferably from about 0.01 to 0.05, most preferably about 0.02);
- adding said fatty acid solution to the filler particles (preferably at a fatty acid solution-to-filler particles weight ratio of from about 0.2 to about 5, more preferably from about 0.5 to about 2, most preferably about 1) and mixing well, to yield a premix;
- adding a latex emulsion to the premix (while simultaneously mixing), wherein the dry latex-to-water weight ratio in the latex emulsion is preferably from about 0.2 to about 5, more preferably from about 0.5 to about 2, most preferably about 1, and wherein the latex emulsion-to-premix weight ratio is preferably from about 0.05 to about 1.5, more preferably from about 0.1 to about 0.8, most preferably about 0.3.

### Application of the coating composition onto a sheet material or a gypsum board

The above-described coating preparation can be used as a treatment for making a hydrophobic or superhydrophobic plasterboard (or gypsum board).

According to one embodiment (hereafter sheet coating embodiment), a sheet material is first coated with the coating preparation of the invention; said coated sheet material is subsequently used as a liner or facer for a gypsum board. In this case, the coating composition is preferably applied onto only one side of the sheet material, so that the other side remains hydrophilic and thus suitable for binding to a gypsum core sandwiched between the two sheets.

An alternative method of producing a hydrophobic or superhydrophobic gypsum board (hereafter board coating embodiment) comprises making a gypsum board with a facing sheet and a backing sheet in a conventional way in the art of plasterboard manufacture, and then coating the exterior side of one or both of the facing sheet and backing sheet with the above-described coating composition.

In the context of the sheet coating embodiment, the process of coating the liner is preferably conducted in the paper mill and on the paper machine during fabrication (i.e. prior to delivery to the wallboard plant). This can also be done at other times given adequate coating technology. The chemistry of the coating works if it is uniformly applied to the liner. Coating in the paper mill yields very good results, but other techniques are also suitable. Most preferred is in a size press in a paper machine or off line coating machine in the paper mill. Only one or both of the two sheets subsequently used as a backing and facing sheet for the gypsum board may be coated in the sheet coating embodiment.

In the context of the board coating embodiment, the preferred application is on the wet board after inversion onto the ivory front exposed surface of the board before the dryer.

The coating efficiency is a function of several properties of the basepaper. It is in particular a function of the sizing of the uncoated liner. A better sized liner is easier to coat to a high performing level. A man skilled in the art of coating will understand how to produce a suitable basepaper. More information on coating and sizing may be found in the following reference book: *"*Pigment coating and surface sizing of paper, papermaking science and technology", edited by Esa Lehtinen, Helsinki University of technology, published by Fapet Oy Finland, ISBN 952-5216-11-X.

The sheet material to be used in either one of these methods can comprise one or more plies and can be made of cellulose-based material, fiberglass, synthetic fibers or a mixture thereof. It can be in the form of a woven or non-woven textile. A preferred liner is a regular wallboard liner although other wallboard liners with specific properties such as increased hydrophobicity are possible.

The sheet material for gypsum wallboard is one having properties allowing the sheet material to be used notably in a gypsum wallboard line manufacturing process. Notably the sheet is such that it allows mechanical properties of the board to be obtained (e.g. the sheet basis or surface weight can be comprised between 50 and 300 g/m² depending on the desired mechanical properties of the gypsum wallboard. Notably it also allows the drying of the gypsum wallboard to be performed, either after and/or before the coating has been applied on the sheet for gypsum wallboard. Notably, the sheet for gypsum wallboard presents a suitable porosity, known in the art e.g. as the Gurley porosity, for the drying. The sheet for gypsum wall board is such that the water vapor may go through it, allowing the drying conditions to remain classical when manufacturing the gypsum wallboard. Typically, the porosity of the sheet is from about 30 to about 100 sec/100 ml. This air porosity is the volume of air that goes through a given surface in a given period of time using a pressure difference of 1.22 kPa. The apparatus consists of a vertically positioned outer cylinder which is partly filled with a sealing fluid, and an inner cylinder that can slide freely in the outer cylinder. Air pressure, generated by the weight of the inner cylinder, is applied to the specimen which is held between clamping plates. The clamping plates are located at the bottom of the apparatus, and a center feed tube directs the pressurized air to the clamping plates. Top of the floating inner cylinder is closed. One may also refer to standard ASTM T460, Air resistance of paper (Gurley method).

In both the sheet coating embodiment and the board coating embodiment, the coating can be applied using traditional coating machinery, such as a curtain coater. An example of a curtain coater is that provided by Hymmen International, which can be custom designed to adapt to a particular production line or manufacturing facility. The curtain coater provides a continuous curtain of the coating through which the wet gypsum board or paper used to manufacture gypsum board is passed. Alternative coating machinery may include sprayers, such as nozzle or shower sprayers, drip lines, and atomization techniques. An example of a spray technology is that provided by Graco, Inc. using spray tips suspended over the wallboard or paper line. Other preferred alternative methods are air knife, roll coating and blade coating technologies.

After coating the substrate, drying may advantageously be performed in order to improve the properties of the polymeric binder. Alternatively, the sheet or the gypsum board may be dried without additional heating. A combination of drying and heating may also be used.

When the coating is directly applied onto a facer-covered gypsum board (board coating embodiment), either the ivory face or the back grey, it may be applied under any condition of set of the gypsum. Any of the paper mill coating techniques may be applied onto the wallboard line. For example, the coating can be applied before oven drying, in which case the coated gypsum board is then dried and prepared for storage and shipping. Alternatively, the coating can be applied after drying either on-line or offline the wallboard line.

The coating can be applied to the whole surface area of the sheet material (respectively of the gypsum board), or to predetermined portions thereof. In the latter case, predetermined portions can be so designated by, for example, masking the sheet material (respectively the gypsum board) to prevent coating of the designated sections or by adjusting the coating machinery to only apply the coating to predetermined portions. For example, the coating may be omitted substantially on the longitudinal tapered edges (or transverse tapered edge, if any).

The hydrophobic or superhydrophobic gypsum boards obtained owing to the invention may be used in all conventional applications of gypsum boards such as the making of drywall. Said hydrophobic or superhydrophobic gypsum boards with breathable paper are also useful for flat commercial roofing or sheathing applications.

### EXAMPLE

The following example illustrates the invention without limiting it.

### Coating compositions

Different coating compositions were prepared:

### COATING C:

- mixing 4 g sodium oleate (Sigma, grade 95%) with 198 g deionized water;
- adding the sodium oleate solution to 200 g calcium carbonate (Sturcal H, supplied by Specialty minerals Lifford);
- mixing well and adding 120 g of a latex dispersion during the mixing (prepared with 60 g of dry latex supplied by BASF under reference Acronal S790).

### COATING D:

- mixing 4 g sodium oleate (Sigma, grade 95%) with 198 g deionized water;
- adding the sodium oleate solution to 200 g calcium carbonate (Sturcal H, supplied by Specialty minerals Lifford) previously ground;
- mixing well and adding 120 g of a latex dispersion during the mixing (prepared with 60 g of dry latex supplied by BASF under reference Acronal S790).

### COATING E (comparative example):

- mixing 4 g sodium oleate (Sigma, grade 95%) with 198 g deionized water;
- adding the sodium oleate solution to 200 g calcium carbonate (Socal 2, supplied by Solvay, France);
- mixing well and adding 120 g of a latex dispersion during the mixing (prepared with 60 g of dry latex supplied by BASF under reference Acronal S790).

### COATING F:

- mixing 4 g sodium oleate (Sigma, grade 95%) with 198 g deionized water;
- adding the sodium oleate solution to 200 g calcium carbonate (Sturcal H, supplied by Specialty minerals Lifford);
- mixing well and adding 120 g of a latex dispersion during the mixing (prepared with 60 g of dry latex supplied by Dan Che Co Ltd under reference LT-6280).

Sturcal H has a density of 0.61 g/ml (manufacturer specification), a D₅₀ of about 3 µm (manufacturer specification) and a BET specific surface area of about 4 m²/g, as measured on a MICROMERITIC apparatus in a conventional way. The calcium carbonate particles of Sturcal H have a very characteristic spiny structure which is blatant on the picture of **Figure 1**.

### Paper substrate

In a first set of experiments, this coating composition was applied onto two paper substrates, namely a standard Ivory paper (200g/m²) referred below to as paper A, and a standard Ivory paper with a higher degree of hydrophobicity referred to below as paper B (paper B is manufactured similarly as paper A but with a higher degree of sizing).

The above coating composition was applied onto the top side of the paper substrate using a bench coater (K-coater, RK Print-Coat Instruments Ltd, UK). The coat weight was approximately 70 g/m². After coating, the substrate was oven-dried at 70°C for 2 minutes. Each experiment was repeated twice to check reproducibility.

The performances of the coated sheets were quantitatively analyzed by four complementary measures, namely the surface water absorption (Cobb), the water vapor permeability, the initial contact angle and the rolling angle (see protocols below). The results are summarized in **Table 1** below.

### Gypsum miniboards

In a second set of experiments, gypsum miniboards were prepared.

The core of the miniboards had the following composition:
- stucco: 7500-8000 g/m²;
- finely ground gypsum: 60-75 g/m²;
- retarder: 0.1-0.15 g/m²;
- plasticizer (polycarboxylated polyox): 20-35 g/m²;
- starch: 30-60 g/m²;
- foaming agent: 1-4 g/m²;
- silicone oil: 50-80 g/m²;
- clay: 400-800 g/m²;
- water/stucco ratio: 0.7-0.8.

The wallboard liner was cut 350 mm wide and 658 mm long in the cross direction with a razor knife. The outer side of the liner was creased to make a sharp fold at 11.5 mm from each cross direction end of the liner. Rubber cement glue was applied to the creased sections. The creased ends were folded perpendicular to the field between the creases. The liner was bent along the short dimension; the two glued surfaces were aligned and affixed to make a 350 mm long tube. The tube was formed around a board and the glued joint was pressed against the forming board to make a uniform smooth closed joint. The lower end of the tube was closed with tape and the liner was placed in a support that allows the upper opening to remain open.

The dry ingredients were weighed and then mixed in a Hobart mixer with a wire whisk. Foam was generated with the foaming agent. The liquid additives were weighed into a bowl with the Potash and water was added to the liquid additives, before stirring with a spatula.

The water and liquid additives were poured into the Hobart mixer bowl with the stucco and dry additives, the mixer was started to make a uniform mixture and then stopped. The foam was added into the water and stucco slurry, and the Hobart mixer was started to combine the foam and then stopped. The wire whisk and the bowl were dismounted from the Hobart mixer base. The contents were poured directly into the bottom of the open liner and the support was closed to make the thickness 13 mm. The excess was removed from the top of the liner to leave a flat surface.

Gilmore set was measured in the upper surface of the mini-board core. After Gilmore initial set, the mini-board was carefully removed from the support. The wet mini-board was cut into a 316 mm by 316 mm square with a razor knife with uniform 13 mm thickness. The mini-board was allowed to achieve Gilmore final set and then dried board in a hot air under 100°C until it achieves a stable weight. The mini-board was conditioned at 23°C and 50% RH for 24 hours before measuring mechanical properties.

The performances of the miniboards were quantitatively analyzed by four complementary measures, namely the surface water absorption (Cobb), the initial contact angle, the rolling angle and the mortar adhesion (see protocols below). The results are summarized in **Table 2** below.

### Water absorption

The method used to measure the ability of coated samples to absorb distilled water is described by ASTM D3285 test method. The time of exposure is 2 hours.

### Water vapor permeability

The coated samples are sealed on the aperture of a beaker previously half-filled with known quantity of water. The beakers are stored in an oven for a given period of time and weighted at different moments during this period. The permeability rate of vapor passing through the coated samples is expressed in g/min/m².

### Initial contact angle measurement

Short-time contact angles of drops (drop volume 3 µl) of deionized water on the coated sheets were measured using a Digidrop instrument. Five drops were autopipetted (from a fixed height of 1 mm from drop bottom to coat surface) on the coated board surface. The time from contact to measurement of advancing angle was approximately 10 s. This is a standard measure of short-term hydrophobicity and superhydrophobicity, reflecting the ability of the substrate to reject water drops on first contact.

### Rolling angle measurement

The drop rolling tests were performed using a tilt table. A water droplet (drop volume 0.05 ml) was dropped on the coated samples pre-inclined at fixed angles. The lowest angle for which free rolling occurs, i.e. the drop rolls the entire distance of the sample size (around 10 cm), is the value assigned to the substrate. Failure to roll freely at 33° is regarded as a no-score, despite the fact that free rolling may occur at higher angles not tested (e.g. approaching vertical). It is expected that drop rolling is closely dependent on advancing initial contact angle (see above).

### Mortar adhesion

The aim of the test is to determine the pull off resistance of a mortar product applied to a plaster board by applying a force perpendicular to the surface of the sample.

Materials: a SATTEC dynamometer graduated in 0 - 100 daN with an indicator to register the maximum force to rupture the adhesive mortar interface; cylindrical molds made from PVC pipe with a 50mm internal diameter and 10mm long. Metal adhesion test plates 50 mm in diameter, 10mm thick.

Method of preparation: care was taken to obtain a clean dry flat surface for testing. The mortar mix was gauged to standard consistency and the water to product proportion was noted. 5 sites were selected on the surface to be tested. The mold was held firmly on the surface, filled with mortar and troweled flat (for each site). The surface of the molded samples was cured at 20 ± 5°C and 60 ± 10% RH. The mold was removed from the mortar after 24 hours very carefully. The demolded samples were cured an additional 6 days at 20 ± 5°C and 60 ± 10% RH.

Method of testing: the metal adhesion plate was aligned and glued to the top of the mortar sample with an epoxy glue. The epoxy was cured 7 days at 20 ± 5°C and 60 ± 10% RH. The SATTEC dynamometer was placed on the metal adhesion test plate and the instrument was leveled. The dial was zeroed on the instrument. The load was increased in a rapid manner until rupture. The force was read and recorded in decanewtons. The average of the result was calculated.

**Table 1 - Performances of the coated paper substrate**

| | Initial Cobb Value 2 hrs (g/m²) | Coat weight (g/m²) | Vapor permeability (g/min/m²) | Contact angle | Rolling angle |
|---|---|---|---|---|---|
| Paper substrate A | 152 | - | 1.00 | 88° | >33° |
| Paper substrate B | 96 | - | 1.00 | 101° | >33° |
| Paper A coated with formulation C | 134 | 70 | 0.78 | 142° | 1.8° |
| Paper A coated with formulation D | 80.5 | 70 | 0.60 | 116° | >33° |
| Paper A coated with formulation E | 117 | 70 | 0.65 | 127° | >33° |
| Paper A coated with formulation F | 94 | 70 | 0.85 | 140° | 1.4° |
| Paper B coated with formulation C | 134 | 70 | 0.98 | 145° | 0.64° |

The results are particularly good with formulations C and F, especially as regards the rolling angle.

**Table 2 - Gypsum board substrate**

| | Initial Cobb Value 2 hrs (g/m²) | Coat weight (g/m²) | Contact angle | Rolling angle | Mortar adhesion (daN) |
|---|---|---|---|---|---|
| Miniboard with paper A | >500 | - | 100 | >33° | 98 |
| Miniboard with paper A + formulation C | 161 | 70 | 139° | 2.8° | 64 |
| Miniboard with paper A + formulation F | 139 | 70 | 137° | 1.9° | ** |
| Miniboard with paper B + formulation C | 265 | 70 | 129° | 2.5° | 77 |

| | | | | | |
|---|---|---|---|---|---|
| **: failure due to poor coating/paper adhesion. | | | | | |

## Claims

1. A gypsum board comprising a gypsum core having a first side and a second side and a facing sheet disposed on the first side, wherein the facing sheet is made of a sheet material and said sheet material comprises at least one surfactant, filler particles and at least one polymeric binder.

2. The gypsum board of claim 1 which additionally comprises a backing sheet on the second side, wherein the backing sheet is made of a sheet material and said sheet material comprises at least one surfactant, filler particles and at least one polymeric binder.

3. The gypsum board of claim 1 or 2 wherein:
- the at least one surfactant is present in a weight amount of from about 0.2 to about 20 parts, preferably from about 1 to about 4 parts per 100 parts of filler particles;
- the at least one polymeric binder is present in a weight amount of from about 10 parts to about 60 parts, preferably from about 20 parts to about 40 parts per 100 parts of filler particles.

4. The gypsum board of any one of claims 1 to 3, wherein the at least one surfactant is at least one fatty acid or salt thereof.

5. The gypsum board of claim 4, wherein the at least one fatty acid is selected from the group consisting of stearic acid, palmitic acid, oleic acid and salts thereof, in particular sodium oleate.

6. The gypsum board of any one of claims 1 to 5, wherein the filler particles are inorganic particles, the surface of which is basic or has been made basic by treatment, and are preferably selected from the group consisting of aluminum hydroxide, barium sulfate, calcite, calcium carbonate, calcium sulfate, barium sulfate, aluminum hydride, magnesium hydroxide, magnesium carbonate, calcinated clay, dolomite, magnesite, talc, titanium dioxide, vaterite, anatase, kaolin, zincite, corundum, hematite, magnetite, ilmenite, cassiterite, dispore, boehmite, goethite, lepidocrocite, rhodocrosite, siderite, baryte, strontianite, apatite, feldspar, fluorite, silicone dioxide and combinations thereof.

7. The gypsum board of claim 6, wherein the filler particles are precipitated calcium carbonate particles, preferably aragonite.

8. The gypsum board of one of claims 1 to 7, wherein the filler particles have a D₅₀ of less than about 20 µm, preferably from about 0.1 to about 20 µm, most preferably from about 0.5 to about 10 µm.

9. The gypsum board of one of claims 1 to 8, wherein the filler particles have an absolute density (in kg/L) of less than about 1, preferably from about 0.45 to about 0.65.

10. The gypsum board of one of claims 1 to 9, wherein the filler particles have a BET specific surface area of more than about 0.5 m²/g, preferably from about 0.5 to about 20 m²/g.

11. The gypsum board of one of claims 1 to 10, wherein the filler particles comprise acicular particles.

12. The gypsum board of any one of claims 1 to 11, wherein the at least one polymeric binder is a latex selected from the group consisting of carboxylated latex, styrene acrylate, styrene-butadiene latex and mixtures thereof.

13. The gypsum board of any one of claims 1 to 12, wherein the sheet material comprises paper, glass fibers, natural fibers, synthetic fibers, composite paper or a woven or non-woven textile.

14. The gypsum board of any one of claims 1 to 13, wherein the at least one surfactant, filler particles and at least one polymeric binder are present as a coating on the surface of the sheet material opposite to the gypsum core.

15. The gypsum board of claim 14, wherein the coating partially or wholly penetrates the sheet material.

16. The gypsum board of any one of claims 1 to 15, wherein the at least one surfactant, filler particles and at least one polymeric binder are present at a density of from about 3 to about 100, preferably from about 10 to about 50, expressed in g of coating composition per m² of sheet material.

17. The gypsum board of any one of claims 1 to 16, wherein the sheet material further comprises at least one additive selected from the group consisting of optical brighteners, defoaming agents, antioxidants, film formation agents, coalescence agents, biocides, fungicides, lubricants, rheology modifiers, crosslinkers, dyes, and color pigments or a combination thereof.

18. A process of making a gypsum board, comprising the steps of:
- depositing a gypsum slurry to form a gypsum core onto a facing sheet;
- placing a backing sheet opposite the facing sheet with the gypsum core therebetween;
wherein said facing sheet and/or backing sheet is made of a sheet material the surface of which comprises at least one surfactant, filler particles, a polymeric binder; and
- drying the board.

19. A process of making a gypsum board comprising the steps of:
- treating a sheet material, said treating step comprising the step of applying a coating composition onto at least one side of the sheet material, wherein the coating composition comprises at least one surfactant, filler particles, a polymeric binder and water, the coating composition being applied onto only one side of the sheet material;
- depositing a gypsum slurry to form a gypsum core onto a facing sheet;
- placing a backing sheet opposite the facing sheet with the gypsum core therebetween; and
- drying the board;
wherein the facing sheet and/or the backing sheet are made of the treated material.

20. A process of making a gypsum board comprising the steps of:
- depositing a gypsum slurry to form a gypsum core onto a facing sheet, wherein said facing sheet is made of a sheet material;
- placing a backing sheet opposite the facing sheet with the gypsum core therebetween,
wherein said backing sheet is made of a sheet material;
- treating the sheet material of the facing and / or backing sheet, said treating step comprising the step of applying a coating composition onto at least one side of the sheet material, wherein the coating composition comprises at least one surfactant, filler particles, a polymeric binder and water and the coating composition is applied on the side of the sheet material which is not in contact with the gypsum core; preceded or followed by
- drying the board.

21. The process of claim 19 or 20, wherein the coating composition is applied by at least one method selected from the group consisting of spray coating, dip coating, roll application, free jet application, blade metering, rod metering, metered film press coating, air knife coating, curtain coating, flexography printing, roll coating and powder coating.

22. The process of one of claims 19 to 21, wherein the treating step comprises heating the sheet material after applying the coating composition.

23. The process of any one of claims 19 to 22, wherein the coating composition is applied at a paper mill, by roller coating, blade coating, ponding, curtain coating, spraying, atomization, air knife or preferably in a size press in a paper machine.

24. The process of any one of claims 19 to 23, wherein the coating composition comprises:
- from about 0.1 to about 2 wt%, preferably from about 0.5 to about 1 wt%, most preferably from about 0.7 to about 0.8 wt% of at least one surfactant;
- from about 20 to about 55 wt%, preferably from about 30 to about 45 wt%, most preferably from about 35 to about 40 wt% of filler particles;
- from about 5 to about 20 wt%, preferably from about 8 to about 15 wt%, most preferably from about 10.5 to about 12 wt% of polymeric binder; and
- water.

25. The process of any one of claims 19 to 24, wherein the coating composition is prepared by adding a dispersion of polymeric binder in water to a surfactant / filler particles solution and mixing.

26. The process of claim 25, wherein the surfactant /filler particles solution is prepared by successively:
- mixing the at least one surfactant with water into a surfactant solution;
- mixing the filler particles with water into a filler particles solution; and
- adding the surfactant solution to the filler particles solution and mixing.

27. The process of claim 25, wherein the surfactant /filler particles solution is prepared by successively:
- mixing the at least one surfactant with water into a surfactant solution; and
- adding the surfactant solution to the filler particles and mixing.

28. The process of any one of claims 18 to 27, wherein the gypsum board is according to any one of claims 1 to 17.

29. The use of at least one surfactant, filler particles and polymeric binder for rendering a gypsum board hydrophobic or superhydrophobic.

30. The use of claim 29, wherein the gypsum board is according to any one of claims 1 to 17.
